# EUROPÄISCHE PATENTANMELDUNG

(11) **EP 4 631 822 A1**
(43) Veröffentlichungstag der Anmeldung: **15.10.2025**
(21) Anmeldenummer: 25165589.0
(22) Anmeldetag: 24.03.2025
(51) Int. Cl.: B61L 5/06, B61L 5/10, H02J 50/00

(54) **WEICHENANTRIEBSSYSTEM FÜR SCHIENENFAHRZEUG**

(30) Priorität: 10.04.2024 DE 102024203292
(71) Anmelder: Siemens Mobility GmbH, 80997 München (DE)
(72) Erfinder: Chao, Chen-Xiang, 38106 Braunschweig (DE); Figura, Christian, 06193 Löbejün (DE)
(74) Vertreter: Siemens Patent Attorneys

(57) **Zusammenfassung**

Die Erfindung betrifft ein Elektromechanisches Weichenantriebssystem (1) für eine Gleisweiche (2) eines Schienenfahrzeuggleises (3, 4, 5), aufweisend: einen Elektromotor (8) mit einer Ausgangswelle (9), die mit mindestens einer Weichenzunge (7a, 7b) der Gleisweiche (2) gekoppelt ist; einen elektrischen Generator (11) mit Generatorwelle (12), die mit der Ausgangswelle (9) koppelbar oder gekoppelt ist; einen elektrischen Akkumulator (14), der zum Aufladen mit dem Generator (11) elektrisch verbindbar oder verbunden ist.

## Beschreibung

### Technisches Gebiet

Die vorliegende Erfindung betrifft ein elektromechanisches Weichenantriebssystem für eine Gleisweiche eines Schienenfahrzeuggleises. Ferner betrifft die vorliegende Erfindung ein Verfahren eines Stellens einer Gleisweiche eines Schienenfahrzeugs sowie ein Betreiben einer, insbesondere einer Gleisweiche zugeordneten, Verbraucherkomponente.

### Technischer Hintergrund

Mithilfe einer Gleisweiche kann ein Gleis für ein Schienenfahrzeug in zwei Gleise gegabelt oder ein zweites Gleis aus einem durchgehenden Gleis herausgeführt werden. Die Gleisweiche ermöglicht Schienenfahrzeugen den Übergang von einem auf ein anderes Gleis ohne Unterbrechung der Fahrt.

Im Bereich einer Gleisweiche beziehungsweise einer Gleisweiche zugeordnet können eine oder mehrere Hilfskomponenten oder Verbraucherkomponenten vorgesehen sein, die zum Beispiel Sensordaten ausgeben beziehungsweise erfassen können, die zur Überwachung des Gleises beziehungsweise der Gleisweiche oder der Umgebung der Gleisweiche herangezogen werden können. Sogenannte loT-Komponenten (Internet of Things; Sensorik, Edge Computing, kabelgebundene beziehungsweise kabellose Datenübertragung) in Weichenantrieben benötigen eine Energiequelle, um ihre Funktion zu erfüllen. Grundsätzlich werden herkömmlich elektromechanische Weichenantriebe kabelgebunden mit elektrischer Energie versorgt (Dreiphasen-AC, Einphasen-AC, -DC). Da der Weichenantrieb jedoch auch sicherheitsrelevante Funktionen erfüllt, wie zum Beispiel Endlagen sicher detektieren und spezifische Haltekraft in Endlagen halten, darf die Energieversorgung der Hilfskomponenten, insbesondere loT-Komponenten, nur eine nachweisbar vernachlässigbare Rückwirkung (im Sinne der Safety-Betrachtung) auf die eigentliche Funktion des Antriebs haben.

Daher werden herkömmlicherweise Hilfskomponenten für Gleisweichen nicht aus derjenigen Energiequelle mit Energie versorgt, welche bereitgestellt ist, die Weichenantriebe selbst, das heißt insbesondere Stellmotoren, mit Energie zu versorgen.

Um eine elektrische Rückwirkung der loT-Komponenten auf die Funktionen des Weichenantriebs zu vermeiden, werden oft batteriebetriebene loT-Komponenten eingesetzt. Das heißt, die loT-Komponenten werden über Batterien mit Energie versorgt. Dies erfordert, dass entweder die Batterie nach einer vorgegebenen Zeit ausgetauscht werden muss, was zusätzlichen Aufwand bedeutet, da Personal den Austausch durchführen muss, oder die Batterien werden über eine separate Energiequelle aufgeladen. Hierzu können beispielsweise Solarpanels am Gleisrand eingesetzt werden. Jedoch haben Photovoltaikzellen den Nachteil, dass sie aufgrund der rauen Umgebungen im Gleisrand nicht zuverlässig die Batterien aufladen können (Schnee, Staub, Steinschlag etc.). Daher muss man herkömmlicherweise Batterien mit relativ großer Kapazität vorsehen, was die Anlagen sehr voluminös und schwer macht.

Es ist somit eine Aufgabe der vorliegenden Erfindung, ein System und Verfahren bereitzustellen, mit dem Hilfskomponenten oder Verbraucherkomponenten, die insbesondere einer Gleisweiche zugeordnet sind oder nahe einer Gleisweiche installiert sind, zuverlässig mit Energie versorgt werden können, ohne insbesondere die Zuverlässigkeit von Gleisweichen zu beeinträchtigen oder Sicherheitsfunktionen der Gleisweichen entgegenzustehen.

Unabhängig vom grammatikalischen Geschlecht eines bestimmten Begriffes sind Personen mit männlicher, weiblicher oder anderer Geschlechteridentität mit umfasst.

### Zusammenfassung der Erfindung

Gemäß einer Ausführungsform der vorliegenden Erfindung ist ein elektromechanisches Weichenantriebssystem für eine Gleisweiche eines Schienenfahrzeuggleises bereitgestellt, aufweisend: einen Elektromotor mit einer Ausgangswelle, die (z.B. über einen Stellschieber) mit mindestens einer Weichenzunge der Gleisweiche gekoppelt ist; einen elektrischen Generator mit Generatorwelle, die mit der Ausgangswelle koppelbar oder gekoppelt ist; einen elektrischen Akkumulator, der zum Aufladen mit dem Generator elektrisch verbindbar oder verbunden ist.

Die Gleisweiche kann, wie herkömmlich bekannt, zum Beispiel mindestens eine Zunge, insbesondere zwei Zungen, und/oder eine Innenschiene und/oder eine Flügelschiene und/oder einen Radlenker und/oder ein Weichenherz umfassen.

Der Elektromotor kann ausgebildet sein, mittels Drehung seiner Ausgangswelle mindestens eine Weichenzunge der Gleisweiche zur Weichenstellung zu bewegen. Der Elektromotor kann dazu mit elektrischer Energie aus einem Energieversorgungsnetz versorgt werden, um bei Betreiben ein Drehmoment auf die Ausgangswelle auszuüben, um zu bewirken, dass sich die Ausgangswelle dreht. Die Ausgangswelle kann zum Beispiel über einen Stellschieber mit mindestens einer oder mit zwei Weichenzungen der Gleisweiche gekoppelt sein, um zum Beispiel eine Zunge derart zu bewegen, dass sie an der Backenschiene anliegt, und die andere Zunge zu bewegen, dass sie von der Backenschiene abliegt.

Die Ausgangswelle des Elektromotors kann mit der mindestens einen Weichenzunge auf herkömmliche Weise gekoppelt sein, zum Beispiel mittels einer Übersetzungsvorrichtung, welche eine Rotation in eine Translation übersetzt, wobei zum Beispiel eine Spindel mit Mitnehmer oder Zahnrad und Zahnstange vorgesehen sein kann. Der Elektromotor kann zum Beispiel ein DC-Elektromotor oder ein AC-Elektromotor sein beziehungsweise umfassen. Der Elektromotor kann zum Beispiel ein Synchronelektromotor oder ein Asynchronelektromotor sein.

Der elektrische Generator kann zum Beispiel ein Synchrongenerator oder ein Asynchrongenerator sein. Der Generator kann zum Beispiel ein Permanentmagnetgenerator oder ein Elektromagnetgenerator sein. Eine sich drehende Generatorwelle führt dazu, dass der Generator elektrische Energie erzeugt, die an den elektrischen Akkumulator abgegeben werden kann, um diesen aufzuladen. Die Generatorwelle des Generators muss nicht permanent (fixiert) mit der Ausgangswelle des Stellelektromotors gekoppelt sein, sondern kann zum Beispiel nur abhängig vom Betriebszustand des Stellelektromotors mit der Ausgangswelle des Elektromotors gekoppelt sein, wie weiter im Detail unten beschrieben wird.

Der elektrische Akkumulator kann zum Beispiel einen elektrochemischen Akkumulator umfassen, welcher durch elektrische Energie aufgeladen werden kann und dann elektrochemisch Energie speichern kann. Der Akkumulator muss nicht in fester oder unveränderlicher Weise mit dem Generator elektrisch verbunden sein, sondern kann wahlweise oder bei Bedarf oder selektiv mit dem Generator verbunden werden. Insbesondere kann der elektrische Generator und/oder der Akkumulator vollständig sowohl elektrisch als auch mechanisch von dem Elektromotor entkoppelt beziehungsweise abgekoppelt werden, um insbesondere sicherheitsrelevante Anforderungen der Gleisweiche weiterhin zu erfüllen.

Das Weichenantriebssystem kann ausgebildet sein, den elektrischen Akkumulator nur bei einem Stellvorgang der Gleisweiche mittels des Generators, dessen Generatorwelle mit der Ausgangswelle gekoppelt ist, mit Energie zu versorgen beziehungsweise aufzuladen. Die in dem Akkumulator gespeicherte Energie kann vorteilhafterweise einer Hilfskomponente oder Verbraucherkomponente, insbesondere mindestens einen Sensor umfassend, zugeführt werden, um insbesondere Überwachungsfunktionen hinsichtlich von Umgebungsbedingungen durchführen zu können. Damit kann auf herkömmliche Weise verwendete Batterien verzichtet werden.

Gemäß einer Ausführungsform der vorliegenden Erfindung weist das Weichenantriebssystem ferner ein, insbesondere mechanisches, Kopplungssystem auf, mit Hilfe dessen die Generatorwelle des Generators mit der Ausgangswelle über Kraftschluss und/oder Formschluss, insbesondere einstellbar, koppelbar ist.

Das Kopplungssystem kann eine wahlweise Kopplung der Ausgangswelle des Elektromotors mit der Generatorwelle des Generators ermöglichen. Das Kopplungssystem kann zum Beispiel ausgebildet sein, wahlweise eine Kopplung vorzunehmen beziehungsweise wahlweise eine Kopplung zu unterbrechen. Das Kopplungssystem kann auch ausgebildet sein, einen Grad einer Kopplung zwischen der Ausgangswelle des Elektromotors und der Generatorwelle einzustellen, insbesondere in Abhängigkeit einer Ansteuerung und/oder eines Betriebs des Stellelektromotors. Damit können auch Sicherheitsfunktionen beziehungsweise Sicherheitsanforderungen erfüllt werden. Das Kopplungssystem kann eine oder mehrere Komponenten, wie etwa Kupplung und/oder Riemen und/oder Reibräder, umfassen. Über das Kopplungssystem kann zum Beispiel sowohl der elektrische Generator als auch der elektrische Akkumulator vollständig von dem Elektromotor (z.B. mechanisch) entkoppelt werden.

Gemäß einer Ausführungsform der vorliegenden Erfindung ist das Kopplungssystem ausgebildet, den Kraftschluss und/oder Formschluss zwischen der Generatorwelle und der Ausgangswelle nur bei Umlauf bzw. Drehung der Ausgangswelle zu bewirken.

Zum Beispiel kann eine Kopplung über Kraftschluss und/oder Formschluss zwischen der Generatorwelle und der Ausgangswelle nur dann vorgenommen werden, wenn die Umdrehungsgeschwindigkeit der Ausgangswelle des Elektromotors oberhalb einer bestimmten Schwelle liegt oder insbesondere über eine vorgegebene Zeitspanne oberhalb einer vorgegebenen Umdrehungsgeschwindigkeitsschwelle liegt. Damit können Sicherheitsanforderungen an die Gleisweiche sichergestellt werden.

Gemäß einer Ausführungsform der vorliegenden Erfindung ist das Kopplungssystem ausgebildet, den Kraftschluss und/oder Formschluss zwischen der Generatorwelle und der Ausgangswelle, insbesondere hinsichtlich seiner Stärke, in Abhängigkeit des Betriebes und/oder einer Umlaufgeschwindigkeit und/oder der Ansteuerung des Elektromotors einzustellen.

Das Kopplungssystem kann zum Beispiel Daten bezüglich der Ansteuerung des Elektromotors beziehungsweise Daten bezüglich des Betriebs des Elektromotors berücksichtigen, um eine Kopplung beziehungsweise Entkopplung zwischen der Generatorwelle und der Ausgangswelle zu bewirken. Das Kopplungssystem kann dabei zum Beispiel durch ein Softwareprogramm gesteuert werden, welches zum Beispiel Steuerbefehle oder Ansteuerungssignale für den Elektromotor und/oder Betriebsbedingungen des Elektromotors als Eingabegrößen erhalten kann. Damit ist eine große Flexibilität des Kopplungssystems und Funktionalität bereitgestellt.

Gemäß einer Ausführungsform der vorliegenden Erfindung ist das Kopplungssystem ausgebildet, den Kraftschluss und/oder Formschluss zwischen der Generatorwelle und der Ausgangswelle in Abhängigkeit des Betriebes und/oder einer Umlaufgeschwindigkeit und/oder der Ansteuerung des Elektromotors aufzuheben, insbesondere wenn der Elektromotor nicht in einem Weichenstellvorgang befindlich ist oder angesteuert wird.

Wenn die Kopplung zwischen der Generatorwelle und der Ausgangswelle des Elektromotors aufgehoben ist, kann ein etwaiger Fehlbetrieb des Generators (zum Beispiel betrieben im Motormodus) die Funktionalität der Gleisweiche oder insbesondere des Elektromotors nicht beeinflussen, so dass die Zuverlässigkeit der Gleisweiche inklusive der geforderten Sicherheitsfunktionen gewährleistet werden kann.

Gemäß einer Ausführungsform der vorliegenden Erfindung ist das Kopplungssystem ausgebildet, den Kraftschluss hinsichtlich eines übertragbaren Drehmoments beziehungsweise Leistung zu begrenzen, insbesondere mittels Einstellens einer Vorspannung. Damit können wiederum Fehlfunktionen beziehungsweise negative Wechselwirkungen des elektrischen Generators auf den Stellmechanismus der Gleisweiche verhindert beziehungsweise reduziert werden. Dazu kann zum Beispiel mindestens eine Rutschkupplung und/oder ein Reibriemen und/oder ein Reibrad vorgesehen sein.

Gemäß einer Ausführungsform der vorliegenden Erfindung weist das Kopplungssystem zumindest eines der folgenden auf, insbesondere an oder bei der Generatorwelle und/oder der Ausgangswelle: ein Getriebe, insbesondere ein Riemengetriebe oder ein Reibradgetriebe; eine (schaltbare oder nicht schaltbare) Kupplung.

Das Kopplungssystem kann weiterhin zusätzlich oder alternativ zum Beispiel folgende Komponenten umfassen: Kettengetriebe, Zahnradgetriebe, Wälzkörpergetriebe. Damit kann das Kopplungssystem mit herkömmlich verfügbaren Komponenten realisiert werden.

Gemäß einer Ausführungsform der vorliegenden Erfindung weist das Weichenantriebssystem ferner eine Verbraucherkomponente auf, die zur Energieversorgung mit dem Akkumulator verbindbar oder verbunden ist.

Die Verbraucherkomponente kann als eine Hilfskomponente zum Beispiel zur Überwachung der Gleisweiche beziehungsweise zur Überwachung der Umgebungsbedingungen der Gleisweiche vorgesehen sein. Zum Betrieb kann die Verbraucherkomponente eine elektrische Energieversorgung erfordern. Diese kann vorteilhaft über den Akkumulator realisiert sein. Die Verbraucherkomponente muss nicht ständig mit dem Akkumulator verbunden sein, kann aber über einen oder mehrere Schalter (welche zum Beispiel automatisch gesteuert werden können) mit dem Akkumulator elektrisch verbunden werden.

Das Weichenantriebssystem kann insbesondere eine Steuerung beziehungsweise ein Steuermodul umfassen, um zum Beispiel das Kopplungssystem zu steuern und/oder eine Energieversorgung der Verbraucherkomponente zu steuern. Auch kann zum Beispiel die elektrische Verbindung zwischen dem elektrischen Generator und dem Akkumulator durch die Steuerkomponente gesteuert werden (z.B. geschlossen oder unterbrochen werden). Generell kann die Steuerkomponente als Eingangsgrößen zum Beispiel Ansteuersignale für den Elektromotor und/oder Betriebsbedingungen des Elektromotors erhalten und diese (z.B. teilweise) für die Ansteuerung des Kopplungssystems und/oder von Schaltern zwischen dem Akkumulator und dem Generator und/oder von Schaltern zwischen der Verbraucherkomponente und dem Akkumulator heranziehen. Damit ist eine große Flexibilität geschaffen. Ferner können Sicherheitsanforderungen an die Gleisweiche erfüllt werden.

Gemäß einer Ausführungsform der vorliegenden Erfindung weist die Verbraucherkomponente mindestens einen Sensor auf, insbesondere zum Messen einer Umgebungseigenschaft, ferner insbesondere Temperatur und/oder Feuchtigkeit und/oder Vibrationen (Beschleunigungen) und/oder Abstände/Positionen (z.B. mithilfe von Magnetstreifen). Über die Sensordaten können z.B. Betriebsbedingungen der Gleisweiche erhalten werden.

Gemäß einer Ausführungsform der vorliegenden Erfindung ist die Verbraucherkomponente mit einem Kommunikationsnetzwerk, insbesondere Internet, verbunden, insbesondere kabellos, wobei die Verbraucherkomponente insbesondere ausgebildet ist, um Sensordaten in das Kommunikationsnetzwerk zu übertragen.

Die Verbraucherkomponente kann zum Beispiel über das Kommunikationsnetzwerk mit einem Schienenfahrzeug- beziehungsweise Gleisweichensteuersystem verbunden sein, wobei das Gleisweichensteuersystem Sensordaten, welche von der Verbraucherkomponente erfasst sind und übertragen sind, zur Steuerung der Gleisweiche oder mehrerer Gleisweichen berücksichtigen kann. Damit kann ein Betrieb der Gleisweiche sicher gewährleistet sein.

Gemäß einer Ausführungsform der vorliegenden Erfindung ist die Verbraucherkomponente als eine loT-Komponente (Internet of things, Internet der Dinge) ausgebildet. IoT-Komponenten können Teile eines loT-Systems sein, das im Allgemeinen Daten sammeln und/oder senden und/oder verarbeiten kann. IoT-Komponenten können entsprechend eine oder mehrere dieser Funktionen übernehmen. Bei der vorliegenden Erfindung kann es sich insbesondere um Datensammler (z.B. Sensoren) und Datentransferierer ("IoT-Gateways") handeln, die die gesammelten Daten kabellos oder kabelgebunden an ein datenverarbeitendes Backend-System weiterleiten können.

Gemäß einer Ausführungsform der vorliegenden Erfindung weist das Weichenantriebssystem ferner eine Haltebremse auf, die zum selektiven Feststellen bzw. Fixieren der Ausgangswelle ausgebildet ist, insbesondere wenn der Elektromotor nicht in einem Weichenstellvorgang befindlich ist und/oder dazu angesteuert wird und/oder wenn sich die Ausgangswelle nicht in Rotation befindet.

Mittels der Haltebremse kann eine zuverlässige Funktion der Gleisweiche sichergestellt werden. Die Haltebremse kann zum Beispiel dann eingesetzt beziehungsweise ausgelöst werden, wenn die Gleisweiche in zum Beispiel einem von zwei Zuständen befindlich ist, zum Beispiel wenn eine der Zungen anliegend an eine Backenschiene ist und eine andere der Zungen abliegend von einer Backenschiene befindlich ist. Die Haltebremse kann auch durch das oben erwähnte Steuersystem gesteuert werden, zum Beispiel, wenn der Elektromotor nicht in Betrieb genommen ist, das heißt, wenn gerade kein Weichenstellvorgang vorgenommen wird.

Gemäß einer Ausführungsform der vorliegenden Erfindung bewirkt bei einem Weichenstellvorgang der Elektromotor mindestens eine bis zehn Umdrehungen oder 10 bis 100 oder 100 bis 1000 Umdrehungen der Ausgangswelle, um damit die gekoppelte Generatorwelle des Generators anzutreiben, sodass der Generator elektrische Energie an den Akkumulator abgibt, um ihn aufzuladen.

Damit kann eine zuverlässige Aufladung des Akkumulators während eines Weichenstellvorgangs bewirkt werden. Während eines Weichenstellvorgangs kann zum Beispiel zwischen 5% und 20% der Gesamtkapazität des Akkumulators aufgeladen werden. Z.B. könnten zwischen 200 Ws und 500 Ws pro Weichenstellvorgang zum Treiben des Generators abgreifbar sein. Dies entspräche bei einer 700 mAh Batterie (bei 3.3 V) für einen Weichenstellvorgang ca. 10 bis 20 % der Speicherkapazität der Batterie. Energiesparsame loT Sensoren verbrauchen in der Größenordnung ~100 mA während sie Daten sammeln/senden, deutlich weniger im Wartezustand ("Sleep"). Andere Werte sind möglich. Gemäß einer Ausführungsform der vorliegenden Erfindung wird der Elektromotor von einem Energieversorgungsnetz mit Energie versorgt, insbesondere dreiphasig oder einphasig AC oder DC. Damit können herkömmliche Verfahren zur Energieversorgung des Elektromotors herangezogen werden.

Gemäß einer Ausführungsform der vorliegenden Erfindung sind Sicherheitsfunktionen und/oder Zuverlässigkeitsanforderungen des Weichenantriebssystems durch eine Verwendung des Elektromotors zum Aufladen des Akkumulators nicht beeinträchtigt.

Dies kann zum Beispiel durch die entsprechende Auslegung des Kopplungssystems und/oder einer Schaltbarkeit der elektrischen Verbindung zwischen dem Generator und dem Akkumulator und/oder zwischen der Schaltbarkeit zwischen dem Akkumulator und der Verbraucherkomponente erreicht werden, insbesondere realisiert durch ein Steuersystem.

Es sollte verstanden werden, dass Merkmale, welche individuell oder in irgendeiner Kombination in Bezug auf ein Weichenantriebssystem beschrieben, bereitgestellt oder vorgesehen sind, individuell oder in irgendeiner Kombination auch für ein Verfahren eines Stellens einer Gleisweiche eines Schienenfahrzeuggleises bereitgestellt oder angewendet werden können, oder umgekehrt, gemäß Ausführungsformen der vorliegenden Erfindung.

Gemäß einer Ausführungsform der vorliegenden Erfindung ist ein Verfahren eines Stellens einer Gleisweiche eines Schienenfahrzeuggleises bereitgestellt, aufweisend: Betreiben eines Elektromotors mit einer Ausgangswelle, die mit mindestens einer Weichenzunge der Gleisweiche gekoppelt ist, um die Weichenzunge zu bewegen; während des Betreibens des Elektromotors: Antreiben eines elektrischen Generators mit Generatorwelle, die mit der Ausgangswelle gekoppelt ist; Aufladen eines elektrischen Akkumulators, der mit dem Generator elektrisch verbunden ist.

Das Verfahren kann dabei zum Beispiel ein Benutzen des Weichenantriebssystems gemäß einer der vorangehenden Ausführungsformen umfassen. Umgekehrt kann das oben beschriebene Weichenantriebssystem ausgebildet sein, das Verfahren eines Stellens einer Gleisweiche eines Schienenfahrzeuggleises durchzuführen oder zur Durchführung zu steuern.

Gemäß einer Ausführungsform der vorliegenden Erfindung ist bereitgestellt ein Verfahren eines Betreibens einer, insbesondere einer Gleisweiche zugeordneten, Verbraucherkomponente, aufweisend: Durchführens eines Verfahrens gemäß der vorangehenden Ausführungsform; Versorgen der Verbraucherkomponente mit Energie aus dem Akkumulator.

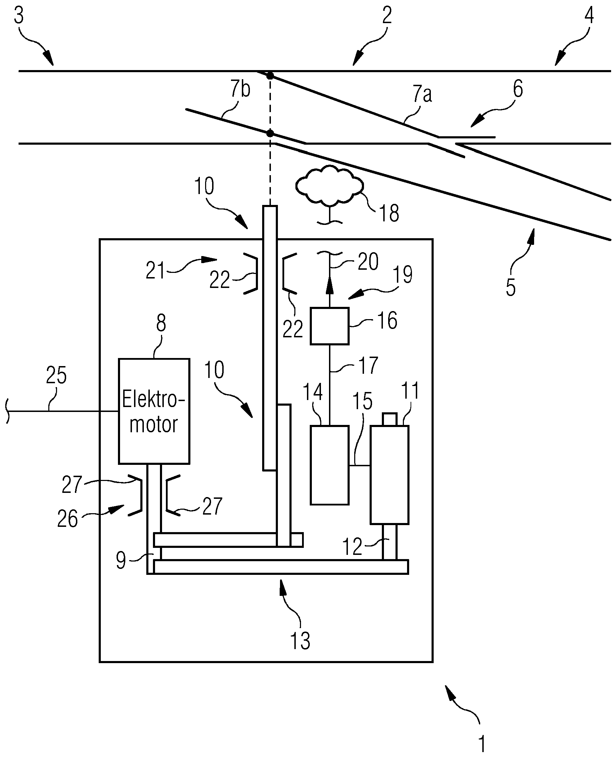

### Exemplarische Ausführungsbeispiele der Zeichnung

Die Figur zeigt in schematischer Weise ein elektromechanisches Weichenantriebssystem gemäß einer Ausführungsform der vorliegenden Erfindung.

### Detaillierte Beschreibung der Ausführungsbeispiele

Ausführungsformen der vorliegenden Erfindung werden nun mit Bezug auf die beiliegende Zeichnung erläutert. Die Erfindung ist nicht auf die illustrierten oder beschriebenen Ausführungsformen beschränkt.

Die Figur zeigt in schematischer Weise ein elektromechanisches Weichenantriebssystem gemäß einer Ausführungsform der vorliegenden Erfindung. Das elektromechanische Weichenantriebssystem 1 für eine Gleisweiche eines Schienenfahrzeuggleises ist ausgelegt, eine Gleisweiche 2 eines Schienenfahrzeuggleises 3 zu stellen. Das Schienenfahrzeuggleis 3 spaltet hinter der Gleisweiche 2 in zwei Gleisabschnitte 4 beziehungsweise 5 auf. Die Gleisweiche 2 ermöglicht, dass ein Schienenfahrzeug wahlweise von dem Gleisabschnitt 3 herkommend in den Gleisabschnitt 4 oder in den Gleisabschnitt 5 einfährt. Die Weiche weist dafür ein Gleisherz 6 sowie Gleiszungen 7a und 7b auf, welche mittels des Weichenantriebs beziehungsweise Weichenantriebssystems 1 verstellt beziehungsweise bewegt werden können.

Das Weichenantriebssystem 1 weist einen Elektromotor 8 mit einer Ausgangswelle 9 auf, die mit der Weiche 2 über einen Stellschieber 10 verbunden ist. Elektromotor 8 ist über Leitung 25 mit Energieversorgungsnetz verbunden. Insbesondere ist die Ausgangswelle 9 mit mindestens einer Weichenzunge 7a, 7b der Gleisweiche 2 verbunden, insbesondere über den Stellschieber 10. Dabei wird die Rotationsbewegung der Ausgangswelle 9 in eine Translationsbewegung des Stellschiebers 10 übersetzt, zum Beispiel mithilfe einer Spindel mit Mitnehmer oder Zahnrad und Zahnstange, zum Beispiel.

Das Weichenantriebssystem 1 weist ferner einen elektrischen Generator 11 auf, der mit der Ausgangswelle 9 (des Elektromotors 8) koppelbar beziehungsweise gekoppelt ist. Dabei ist die Generatorwelle 12 des Generators mit der Ausgangswelle 9 des Elektromotors 8 koppelbar beziehungsweise gekoppelt, insbesondere über ein Kopplungssystem 13. Das Weichenantriebssystem 1 weist ferner einen elektrischen Akkumulator 14 auf, der zum Aufladen mit dem Generator 11 elektrisch verbindbar oder verbunden ist. In der illustrierten Ausführungsform ist der Generator und der elektrische Akkumulator 14 elektrisch über eine Elektroverbindung 15 elektrisch verbunden. Die Elektroverbindung 15 kann nicht im Detail illustrierte Schalter aufweisen, um wahlweise eine elektrische Verbindung herzustellen beziehungsweise zu unterbrechen.

Das Kopplungssystem 13 kann zum Beispiel ein mechanisches Kopplungssystem aufweisen, mithilfe dessen die Generatorwelle 12 mit der Ausgangswelle 9 des Elektromotors 8 über Kraftschluss und/oder Formschluss koppelbar ist. Das Kopplungssystem 13 kann zum Beispiel einen Riementrieb und/oder ein Reibrad und/oder eine Kupplung und weitere Komponenten umfassen.

In der in der Figur illustrierten Ausführungsform umfasst das Weichenantriebssystem 1 ferner eine Verbraucherkomponente 16, die zur Energieversorgung mit dem Akkumulator 14 verbindbar oder verbunden ist. In der illustrierten Ausführungsform ist die Verbraucherkomponente 16 mit dem Akkumulator 14 über eine elektrische Verbindung 17 verbunden, welche zum Beispiel nicht illustrierte Schalter aufweisen kann, um eine Verbindung wahlweise herzustellen beziehungsweise zu unterbrechen. Der Akkumulator 14 kann auch ein Anschlussterminal aufweisen, an dem elektrische Energie für verschiedene Zwecke abgenommen werden kann.

Die lot-Komponente beziehungsweise die Verbraucherkomponente 16 kann zum Beispiel einen Sensor, zum Beispiel Temperatursensor oder Feuchtigkeitssensor oder einen oder mehrere weitere Sensor, aufweisen, um Umgebungseigenschaften oder Bedingungen der Weiche 2 beziehungsweise des Weichenantriebssystems 1 zu detektieren. Über eine entsprechende Kommunikationsschnittstelle 19 ist die Verbraucherkomponente 16 mit einem Kommunikationsnetzwerk 18 verbunden. Über die Kommunikationsschnittstelle 19 kann somit die Verbraucherkomponente zum Beispiel Sensordaten 20 in das Kommunikationsnetzwerk 18 übermitteln. Das Kommunikationsnetzwerk 18 kann ferner mit Weichenantriebsüberwachungs- und -steuersystemen verbunden sein, um zum Beispiel die Weiche 2 über das Weichenantriebssystems 1 auch in Abhängigkeit von Sensordaten 20 zu steuern.

In der in der Figur illustrierten Ausführungsform umfasst das Weichenantriebssystem beziehungsweise die Weiche 2 eine Haltebremse 21 (oder 26), die zum Beispiel über Bremsbacken 22, welche an dem Stellschieber 10 vorgesehen (oder an der Ausgangswelle 9) oder im Elektromotor 8 integriert sein können (siehe Bremse 26 mit Bremsbacken 27), den Stellschieber 10 bzw. die Ausgangswelle 9 fixieren kann. Dazu können zum Beispiel Bremsbacken 22 gegen den Stellschieber 10 (oder die Ausgangswelle 9) gepresst werden, um einen Reibungswiderstand zu bewirken, welcher die entsprechende Komponente fixiert, um deren Bewegung zu verhindern.

Bei einem Weichenstellvorgang vollführt die Ausgangswelle 9 des Elektromotors 8 viele Umdrehungen, währenddessen die Generatorwelle 12 über das Kopplungssystem 13 mit der Ausgangswelle 9 gekoppelt sein kann, um somit den Generator 11 mechanisch anzutreiben. Folglich erzeugt der Generator 11 elektrische Energie, welche dem Akkumulator 14 zugeführt werden kann. Die Verbraucherkomponente 16 kann dann von dem Akkumulator 14 elektrische Energie zu deren Betrieb erhalten.

Das Weichenantriebssystem 1 kann ausgebildet sein, ein Verfahren eines Stellens einer Gleisweiche 2 eines Schienenfahrzeuggleises 3, 4, 5 durchzuführen. Dabei wird der Elektromotor 8 betrieben, um dessen Ausgangswelle anzutreiben oder in Rotation zu versetzen. Die Ausgangswelle 9 ist über den Stellschieber mit mindestens einer Weichenzunge 7a, 7b der Gleisweiche 2 gekoppelt, um die Weichenzunge 7a, 7b zu bewegen. Während des Betreibens des Elektromotors wird der elektrische Generator 11 über die Generatorwelle 12 angetrieben, die mit der Ausgangswelle 9 (jedenfalls in diesem Zustand einer Weichenstellung) gekoppelt ist. In diesem Vorgang kann auch der Generator elektrisch mit dem Akkumulator 14 verbunden sein, um diesen aufzuladen. Ferner kann die Verbraucherkomponente 16 aus dem Akkumulator 14 mit Energie versorgt werden.

Herkömmlicherweise hat ein Elektromotor eines Weichenantriebs große Leistungsreserven, die sogar im Blockierfall der Weiche nicht genutzt werden. Daher kann es problemlos möglich sein, bei der Übertragung der mechanischen Leistung an die Ausgangswelle 9 des Elektromotors 8 einen zusätzlichen mechanischen Strang (Kopplungssystem 13) vorzusehen, der über das Generatorprinzip eine Batterie (oder einen Akku oder Superkondensator/Super-CAP) 14 aufladen kann. Somit kann zum Beispiel bei einem Stellvorgang der Weiche 2 gleichzeitig auch ein Aufladevorgang für eine oder mehrere Batterien 14 erfolgen, die eine oder mehrere Verbraucherkomponenten 16 mit elektrischer Energie versorgen können.

Der Akkumulator 14 kann zum Beispiel eine wiederaufladbare Batterie, zum Beispiel Lithium-Batterie, umfassen oder kann ein anderes System zum Speichern von Energie umfassen, welche dann in elektrische Energie umgewandelt wird, um sie einer Verbraucherkomponente zuführen zu können, welche elektrische Energie zur Funktion benötigt.

Gemäß Ausführungsformen der vorliegenden Erfindung ist sichergestellt, dass der zusätzliche Strang (zum Beispiel Kopplungssystem 13) keinen negativen Einfluss auf die Sicherheitsfunktionen des Weichenantriebs im regulären Stellstrang 10 haben kann. Während eines Umlaufs kann lediglich ein höheres Drehmoment an der Ausgangswelle 9 des Elektromotors 8 notwendig sein (als in dem Fall, in dem der Generator 11 nicht mit Elektromotor gekoppelt ist). Dies ist jedoch bei üblicher herkömmlicher Dimensionierung des Elektromotors 8 kein Problem. Bei Stillstand des Elektromotors 8 darf der Aufladestrang (zum Beispiel umfassend das Kopplungssystem 13) die Sicherheitsfunktionen "halten" und "Endlage" melden, die im Stellstrang 10 verbaut sind, nicht negativ beeinflussen. Dies könnte vor allem dann passieren, wenn in einer Endlage der Kraftfluss reversiert würde (entgegen der Haltekraft, indem zum Beispiel der Generator im Motormodus arbeitet). Theoretisch wäre so je nach Ausführung eine Reduktion der Haltekraft möglich (und gegebenenfalls eine Grenzlage der Endlagensensoren). Um solch ein Verhalten zu verhindern, können verschiedene Maßnahmen ergriffen werden beziehungsweise in dem Weichenantriebssystem implementiert oder realisiert sein:
1. Der Elektromotor 8 kann mit einer Haltebremse 21 ausgestattet werden.
2. Der Kraftschluss beziehungsweise Formschluss zwischen Ausgangswelle 9 und dem Kopplungssystem/IoT-Strang 13 kann begrenzt werden (einstellbar über zum Beispiel Vorspannung bei Riementrieben, Reibrädern ...)
3. Der Kraftschluss beziehungsweise Formschluss zur Ausgangswelle kann durch Mechanismus im Kopplungssystem/lot-Strang 13 nur bei Umlauf schließen (Kupplungsprinzip, zum Beispiel Reibräder in Kontaktringen)
4. Formschluss zur Ausgangswelle durch Mechanismus im Kopplungssystem/lot-Strang 13 nur bei Umlauf schließen (Kupplungsprinzip)

Gemäß Ausführungsformen der Erfindung kann das Weichenantriebssystem vollständig durch den Sicherheitsfall abgedeckt werden. Dadurch könnte eine sehr leichte Installation sichergestellt werden.

Gemäß Ausführungsformen sind jedoch auch Nachrüstungen von bestehenden Weichenantriebssystemen möglich. Für solche Nachrüstfälle müsste eine zusätzliche Sicherheitsbetrachtung durchgeführt werden.

Um zum Beispiel keine zusätzlichen Kabel verwenden oder verlegen zu müssen, kann eine Datenübertragung der Verbraucherkomponente 16 in das Kommunikationsnetzwerk 18 zum Beispiel kabellos, zum Beispiel über Bluetooth/WLAN (zu einem lokalen Gateway), oder per Mobilfunk erfolgen. Dieses Vorgehen kann etwaige Rückwirkungen auf andere Komponenten reduzieren und kann zusätzlich die Installation erleichtern.

Gemäß Ausführungsformen der Erfindung wird eine Batterie beziehungsweise Akkumulator in zuverlässiger Weise während des normalen Betriebs des Weichenantriebs aufgeladen. Die aus dieser Batterie beziehungsweise Akkumulator verfügbare Energie kann zur elektrischen Energieversorgung von Sensoren, zum Beispiel für Temperatur, Feuchtigkeit und Vibration, dienen, die wiederum eine intelligente Diagnose und auch Wartung der Weiche beziehungsweise des Weichenantriebs ermöglichen. Ein regelmäßiger Austausch von herkömmlicherweise verwendeten nicht-aufladbaren Batterien für lot-Komponenten wäre somit nicht mehr notwendig. Es ist zudem auch nicht mehr notwendig, unter hohem Aufwand neue externe Stromversorgungskabel oder sogar dezentrale Energieerzeuger wie Photovoltaikanlagen zu installieren und mit dem Weichenantrieb zu verbinden.

## Patentansprüche

1. Elektromechanisches Weichenantriebssystem (1) für eine Gleisweiche (2) eines Schienenfahrzeuggleises (3, 4, 5), aufweisend:
• einen Elektromotor (8) mit einer Ausgangswelle (9), die mit mindestens einer Weichenzunge (7a, 7b) der Gleisweiche (2) gekoppelt ist;
• einen elektrischen Generator (11) mit Generatorwelle (12), die mit der Ausgangswelle (9) koppelbar oder gekoppelt ist;
• einen elektrischen Akkumulator (14), der zum Aufladen mit dem Generator (11) elektrisch verbindbar oder verbunden ist.

2. Weichenantriebssystem gemäß dem vorangehenden Anspruch, ferner aufweisend:
ein, insbesondere mechanisches, Kopplungssystem (13), mit Hilfe dessen die Generatorwelle (12) des Generators (11) mit der Ausgangswelle (9) über Kraftschluss und/oder Formschluss, insbesondere einstellbar, koppelbar ist.

3. Weichenantriebssystem gemäß dem vorangehenden Anspruch, wobei das Kopplungssystem (13) ausgebildet ist, den Kraftschluss und/oder Formschluss zwischen der Generatorwelle (12) und der Ausgangswelle (9) nur bei Umlauf bzw. Drehung der Ausgangswelle (9) zu bewirken.

4. Weichenantriebssystem gemäß einem der zwei vorangehenden Ansprüche, wobei das Kopplungssystem (13) ausgebildet ist, den Kraftschluss und/oder Formschluss zwischen der Generatorwelle (12) und der Ausgangswelle (9), insbesondere hinsichtlich seiner Stärke, in Abhängigkeit des Betriebes und/oder einer Umlaufgeschwindigkeit und/oder der Ansteuerung des Elektromotors (8) einzustellen.

5. Weichenantriebssystem gemäß einem der vorangehenden Ansprüche 2 bis 4, wobei das Kopplungssystem (13) ausgebildet ist, den Kraftschluss und/oder Formschluss zwischen der Generatorwelle (12) und der Ausgangswelle (9) in Abhängigkeit des Betriebes und/oder einer Umlaufgeschwindigkeit und/oder der Ansteuerung des Elektromotors (8) aufzuheben, insbesondere wenn der Elektromotor nicht in einem Weichenstellvorgang befindlich ist oder angesteuert wird.

6. Weichenantriebssystem gemäß einem der vorangehenden Ansprüche 2 bis 5, wobei das Kopplungssystem (13) ausgebildet ist, den Kraftschluss und/oder Formschluss hinsichtlich eines übertragbaren Drehmoments bzw. Leistung zu begrenzen, insbesondere mittels Einstellens einer Vorspannung.

7. Weichenantriebssystem gemäß einem der vorangehenden Ansprüche 2 bis 6, wobei das Kopplungssystem (13) zumindest eines der folgenden aufweist, insbesondere an oder bei der Generatorwelle (12) und/oder der Ausgangswelle (9):
ein Getriebe, insbesondere zumindest eines der Folgenden aufweisend:
ein Riemengetriebe;
ein Reibradgetriebe;
ein Zahnradgetriebe,
ein Kettengetriebe,
eine Kupplung, insbesondere schaltbar oder nicht schaltbar.

8. Weichenantriebssystem gemäß einem der vorangehenden Ansprüche, ferner aufweisend:
eine Verbraucherkomponente (16), die zur Energieversorgung mit dem Akkumulator (14) verbindbar oder verbunden ist.

9. Weichenantriebssystem gemäß dem vorangehenden Anspruch, wobei die Verbraucherkomponente (16) mindestens einen Sensor aufweist, insbesondere zum Messen einer Umgebungseigenschaft, ferner insbesondere Temperatur und/oder Feuchtigkeit und/oder Vibrationen (Beschleunigungen) und/oder Positionen und/oder Abstände.

10. Weichenantriebssystem gemäß einem der vorangehenden Ansprüche 8 oder 9, wobei die Verbraucherkomponente (16) mit einem Kommunikationsnetzwerk (8), insbesondere Internet, verbunden ist, insbesondere kabellos,
wobei die Verbraucherkomponente insbesondere ausgebildet ist, um Sensordaten (20) in das Kommunikationsnetzwerk zu übertragen.

11. Weichenantriebssystem gemäß einem der vorangehenden Ansprüche 8 bis 10, wobei die Verbraucherkomponente (16) als eine "IoT-Komponente" ausgebildet ist.

12. Weichenantriebssystem gemäß einem der vorangehenden Ansprüche, ferner aufweisend:
eine Haltebremse (21, 26), die zum selektiven Feststellen bzw. Fixieren der Ausgangswelle (9) oder eines Stellstranges (10) ausgebildet ist, insbesondere wenn der Elektromotor (8) nicht in einem Weichenstellvorgang befindlich ist und/oder dazu angesteuert wird und/oder wenn sich die Ausgangswelle (9) nicht in Rotation befindet.

13. Weichenantriebssystem gemäß einem der vorangehenden Ansprüche, wobei bei einem Weichenstellvorgang der Elektromotor (8) mindestens eine bis zehn Umdrehungen oder 10 bis 100 oder 100 bis 1000 Umdrehungen der Ausgangswelle (9) bewirkt, um damit die gekoppelte Generatorwelle (12) des Generators (11) anzutreiben, sodass der Generator elektrische Energie an den Akkumulator (14) abgibt, um ihn aufzuladen.

14. Weichenantriebssystem gemäß einem der vorangehenden Ansprüche, wobei der Elektromotor (8) von einem Energieversorgungsnetz mit Energie versorgt wird, insbesondere dreiphasig oder einphasig AC oder DC.

15. Weichenantriebssystem gemäß einem der vorangehenden Ansprüche, wobei Sicherheitsfunktionen und/oder Zuverlässigkeitsanforderungen des Weichenantriebssystems durch eine Verwendung des Elektromotors (8) zum Aufladen des Akkumulators (14) nicht beeinträchtigt sind.

16. Verfahren eines Stellens einer Gleisweiche (2) eines Schienenfahrzeuggleises (3, 4, 5), aufweisend:
• Betreiben eines Elektromotors (8) mit einer Ausgangswelle (9), die mit mindestens einer Weichenzunge (7a, 7b) der Gleisweiche gekoppelt ist, um die Weichenzunge (7a,7b) zu bewegen;
• Während des Betreibens des Elektromotors (8): Antreiben eines elektrischen Generators (11) mit Generatorwelle (12), die mit der Ausgangswelle (9) gekoppelt ist;
• Aufladen eines elektrischen Akkumulators (14), der mit dem Generator (11) elektrisch verbunden ist.

17. Verfahren eines Betreibens einer, insbesondere einer Gleisweiche (2) zugeordneten, Verbraucherkomponente (16), aufweisend:
Durchführen eines Verfahrens gemäß dem vorangehenden Anspruch;
Versorgen der Verbraucherkomponente (16) mit Energie aus dem Akkumulator (14).
